# EUROPEAN PATENT SPECIFICATION

(11) **EP 3 606 005 B1**
(45) Date of publication and mention of the grant of the patent: **13.04.2022**
(21) Application number: 17907595.7
(22) Date of filing: 26.04.2017
(51) Int. Cl.: H04L 29/08

(54) **REDIRECTION METHOD, CONTROL PLANE NETWORK ELEMENT, AGGREGATION USER PLANE NETWORK ELEMENT, CONTENT SERVER AND TERMINAL DEVICE**
UMLEITUNGSVERFAHREN, STEUEREBENENNETZWERKELEMENT, AGGREGATIONSBENUTZEREBENENNETZWERKELEMENT, INHALTSSERVER UND ENDGERÄTVORRICHTUNG
PROCÉDÉ DE REDIRECTION, ÉLÉMENT DE RÉSEAU DE PLAN DE COMMANDE, ÉLÉMENT DE RÉSEAU DE PLAN UTILISATEUR D'AGRÉGATION, SERVEUR DE CONTENU ET DISPOSITIF TERMINAL

(43) Date of publication of application: 05.02.2020
(73) Proprietor: Huawei Technologies Co., Ltd., Longgang Shenzhen, Guangdong 518129 (CN)
(72) Inventor: ZHU, Hualin, Shenzhen Guangdong 518129 (CN); LU, Wei, Shenzhen Guangdong 518129 (CN); JIN, Weisheng, Shenzhen Guangdong 518129 (CN)
(74) Representative: Pfenning, Meinig & Partner mbB
(86) International application number: PCT/CN2017/082061
(87) International publication number: WO 2018/195829

(56) References cited:
- EP-A1- 3 089 422
- CN-A- 101 262 413
- CN-A- 103 023 859
- CN-A- 104 301 408
- CN-A- 105 897 845
- US-A1- 2016 285 961

## Description

### TECHNICAL FIELD

This application relates to the communications field, and more specifically, to a redirection method and a control plane network element.

### BACKGROUND

As Internet technologies develop, user equipment (User Equipment, UE) can access network resources around the world. However, long-distance network resource transmission results in a high transmission latency and occupancy of a lot of network bandwidth resources. For example, a video server of Facebook is deployed in the United States, and if a Chinese user wants to access the video server, video content needs to be transmitted between the United States and China. In this case, the video content is very far from the user. Therefore, not only a high transmission latency is caused, but also a lot of network bandwidth resources are occupied.

A content delivery network (Content delivery network, CDN) is a technology that allows content (for example, content such as a video/a web page) to be distributed at a location closer to a user. For example, in the CDN technology, the content of the video server of Facebook can be placed nearer to the user. For example, the video server may be deployed in Beijing, China, and in this way, if the Chinese user accesses the video, the user can directly obtain the content from Beijing. Therefore, a transmission latency is reduced, and occupancy of the network bandwidth resources is also reduced. However, in an existing CDN technology, a destination address is redirected to a cache server before a connection is established between user equipment and a content server. In other words, redirection is completed before a network knows what a terminal wants to obtain. This may result in inaccurate DNS redirection when there is not a large enough amount of content stored in the cache server.

More information can be found in EP3089422A1, where a content delivery method is disclosed, the method including: when a content request of user equipment UE is received, acquiring location information of access of a user equipment (UE); acquiring at least one content control apparatus and information about a first area that can be served by the at least one content control apparatus; determining, according to the location information and the information about the first area, a content control apparatus for serving the UE; sending a request for searching for a cache cache device to the determined content control apparatus, where the cache device is configured to provide content requested by the UE; receiving an identifier of a cache device returned by the content control apparatus; and sending a redirection message to the UE, so that the UE redirects to the cache device corresponding to the identifier to acquire the requested content. Furthermore, in EP3089422A1, a data interaction path between UE and a cache device is shortened, which reduces transmission bandwidth of an operator network, thereby improving user experience. In addition, a content delivery apparatus controls whether to select a cache device of a network service provider to serve the UE, that is, a content provider/service provider controls whether to select a cache device of the network service provider to serve the UE, thereby implementing layered control for a content data network. In addition, cache resources of the network service provider can be open to the content provider or the service provider, thereby implementing monetization processing of the cache resources and increasing income of the network service provider.

### SUMMARY

The invention is set out in the appended set of claims. Embodiments of this application provide a redirection method and a control plane network element.

### BRIEF DESCRIPTION OF DRAWINGS

FIG. 1 is a schematic diagram of a communications system that uses a redirection method according to an embodiment of this application;
FIG. 2 is a schematic flowchart of a redirection method according to an embodiment of this application;
FIG. 3A and FIG. 3B are a schematic flowchart of a redirection method according to another embodiment of this application - the examples of Fig. 3A and Fig. 3B and related embodiments are not according to the invention and are present for illustration purposes only;
FIG. 4A and FIG. 4B are a schematic flowchart of a redirection method according to still another embodiment of this application;
FIG. 5 is a schematic block diagram of a computer device according to an embodiment of this application;
FIG. 6 is a schematic block diagram of a control plane network element according to an embodiment of this application;
FIG. 7 is a schematic block diagram of an aggregation user plane network element according to an embodiment of this application;
FIG. 8 is a schematic block diagram of a content server according to an embodiment of this application; and
FIG. 9 is a schematic block diagram of a terminal device according to an embodiment of this application.

### DESCRIPTION OF EMBODIMENTS

The following describes technical solutions of embodiments in this application with reference to accompanying drawings.

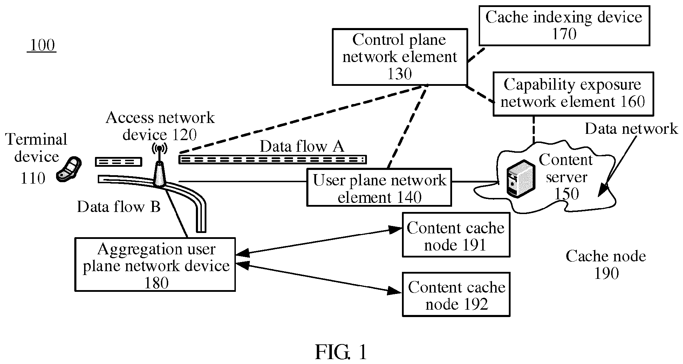

FIG. 1 is a schematic diagram of a communications system that uses a redirection method in this application. As shown in FIG. 1, a communications system 100 includes a terminal device 110, an access network device 120, a control plane network element 130, a user plane network element 140, a content server 150 (Application Server, AS), a capability exposure network element 160, a cache indexing device 170, an aggregation user plane network element 180, and a cache node 190. In addition, a person of ordinary skill in the art can understand that different devices of the communications system 100 communicate with each other by using an interface.

The terminal device 110 may establish a user plane connection to the access network device 120 by using a bearer. Optionally, in the embodiments of this application, the terminal device 110 includes, but is not limited to, a terminal device such as an access terminal, user equipment (User Equipment, UE), a user unit, a user station, a mobile station, a mobile console, a remote station, a remote terminal, a mobile terminal, a user terminal, a terminal, a wireless communications device, a user agent, or a user apparatus. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device that has a wireless communication function, a computing device, another processing device connected to a wireless modem, an in-vehicle device, a wearable device, a terminal device in the Internet of Things, a virtual reality device, a terminal device in a future 5G network, a terminal device in a future evolved public land mobile network (Public Land Mobile Network, PLMN), or the like.

The access network device 120 may be a device that communicates with the terminal device 110, such as a base station or a base station controller. However, it should be understood that the access network device 120 may communicate with any quantity of terminal devices similar to the terminal device 110. It should also be understood that there may be a plurality of air interface connections between the access network device 120 and the terminal device 110. For example, as shown in FIG. 1, there are two air interface connections between the access network device 120 and the terminal device 110, and the two air interface connections are respectively denoted as a data flow A and a data flow B. The access network device 120 may also communicate with the control plane network element 130 by using an interface. Similarly, the access network device 120 may also communicate with the user plane network element 140 by using an interface. Similarly, the access network device 120 may also communicate with the aggregation user plane network element 180 by using an interface. Each access network device may provide communication coverage for a specific geographic area, and may communicate with a terminal device (for example, UE) located within the coverage area (cell). The access network device may support communication protocols of different standards, or may support different communication modes. Optionally, the access network device 120 may provide a wireless access service for a terminal device. For example, the access network device 120 may be an evolved NodeB (Evolved NodeB, eNodeB), a wireless fidelity access point (Wireless Fidelity Access Point, Wi-Fi AP), a worldwide interoperability for microwave access base station (Worldwide Interoperability for Microwave Access Base Station, WiMAX BS), or a radio controller in a cloud radio access network (Cloud Radio Access Network, CRAN). Alternatively, the network device may be a network device in a future 5G network, or a network device in a future evolved public land mobile network (Public Land Mobile Network, PLMN), or the like.

The control plane network element 130 is responsible for mobility management and forwarding path management in the communications system 100. For example, the control plane network element 130 delivers a packet forwarding policy to the user plane network element 140 to instruct a gateway user plane (Gateway User Plane, GW-U) to process and forward a packet according to the packet forwarding policy. The control plane network element 130 may be a software defined networking (Software Defined Network, SDN) controller, a gateway control plane (Gateway Control Plane, GW-C), a mobility management entity (Mobility Management Entity, MME), or a network element including all or some of control functions formed by integrating the foregoing network elements. A software defined networking technology provides an effective approach for a bottleneck problem of gateway signaling processing. A gateway control plane interface signaling processing function is separated from a user plane data forwarding function, the interface signaling processing function is placed on a general-purpose computing platform to become a control plane (Control Plane, CP) network element, and the user plane data forwarding function is placed on a dedicated hardware platform to become a user plane (User Plane, UP) network element. The control plane network element 130 may further be divided into a mobility management network element and a session management network element. The mobility management network element is responsible for mobility management of the terminal device, such as network attachment of the terminal device, and a location change of the terminal device. The session management network element is responsible for session management of the terminal device, such as session establishment, session modification, and session release. In addition, by decoupling controlling and forwarding of a gateway device, a design of a hardware platform is greatly simplified, costs of the hardware platform are reduced, and a mobile packet data network is faster deployed. The MME is mainly responsible for control-plane mobility management and session management, such as user authentication, handover, mobility management of a terminal in an idle mode, user context, and bearer management. Optionally, the control plane network element 130 is further responsible for controlling deployment of a content cache and sending of the content cache, for example, selecting a cache server. Optionally, the control plane network element 130 may be a network element integrated with an AMF (Access and Mobility Management Function) or an SMF (Session Management Function) of a 5G network, or may be an independent network element used to control the deployment of the content cache and the sending of the content cache. Optionally, the control plane network element 130 may not be a single device, and may be a combination of a plurality of devices that cooperatively complete the functions. All devices with the function related to the control plane network element in the solution of the present invention fall within a category of the control plane network element.

The user plane network element 140 is responsible for processing and forwarding a packet. The user plane network element 140 may be a physical or virtual forwarding device such as a P-GW forwarding plane function, an S-GW forwarding plane function, a router, or a switch.

The content server 150 may communicate with the user plane network element 140 by using an interface. Similarly, the content server 150 may communicate with the capability exposure network element 160 by using an interface. It should be understood that the content server 150 may communicate with the control plane network element 130 by using the capability exposure network element 160. It should also be understood that the content server 150 may be an application layer device at an uppermost layer in an IP multimedia subsystem (IP Multimedia Subsystem, IMS), or may be a service capability server (Service Capability Server) SCS. Optionally, the content server 150 may interact with the capability exposure network element 160 by using a standard session initiation protocol (Session Initiation Protocol, SIP), thereby triggering and executing various network services. The content server 150 may provide services including, but not limited to, a multimedia service, a voice call, a video call, a call failure prompt, and message, file, and video sharing. Optionally, the content server 150 mainly serves a service of a data network. The data network may be a packet data network (Packet Data Network, PDN), such as the Internet (Internet), an Internet protocol multimedia service (IP Multi-media Service, IP IMS). Alternatively, the content server 150 may serve as a controller configured to control an application layer device. The content server 150 may not be a single device, and may be a combination of a plurality of devices that cooperatively complete the functions. All devices with the function related to the content server in the solution of this application fall within a category of the content server.

The capability exposure network element 160 may communicate with the control plane network element 130 by using an interface. Similarly, the capability exposure network element 160 may communicate with the content server 150 by using an interface. It should be understood that the capability exposure network element 160 is responsible for data transmission between a mobile network and the content server 150. Optionally, the capability exposure network element 160 may be a SCEF (Service Capability Exposure Function) or a NEF (Network Exposure Function).

The cache indexing device 170 may communicate with the control plane network element 130 by using an interface. The cache indexing device 170 backs up content information stored in the cache node 190. The control plane network element 130 may determine, by querying the cache indexing device 170, a cache node identifier of a cache node that includes content requested by the terminal device 110. The cache indexing device 170 may also be a network element integrated with the control plane network element.

The aggregation user plane network element 180 may communicate with the access network device 120 by using an interface. The aggregation user plane network element 180 may obtain, from the cache node 190, the content requested by the terminal device 110. It should be understood that the aggregation user plane network element 180 may request content from a cache node 190 within coverage of the aggregation user plane network element 180, and then send the content to the terminal device 110. Optionally, the aggregation user plane network element 180 may be a content cache node in the cache node 190.

The cache node 190 may include a plurality of content cache nodes. For example, as shown in FIG. 1, the cache node 190 includes a content cache node 191 and a content cache node 192. Each content cache node in the cache node 190 may perform interactive data transmission with the aggregation user plane network element 180. It should be understood that the cache node 190 may cache the content requested by the terminal device 110. Optionally, the cache node 190 may be a device integrated with a user plane network element.

The terminal device 110 or the access network device 120 may be a wireless communications sending apparatus and/or a wireless communications receiving apparatus. When sending data, the wireless communications sending apparatus may encode the data for transmission. Specifically, the wireless communications sending apparatus may obtain (for example, generate, receive from another communications apparatus, or store in a memory) a specific quantity of data bits that need to be sent to the wireless communications receiving apparatus through a channel. The data bits may be included in a transport block (or a plurality of transport blocks) of data, and the transport block may be segmented to generate a plurality of code blocks.

In addition, the communications system 100 may be a public land mobile network (Public Land Mobile Network, PLMN), a D2D (Device to Device) network, an M2M (Machine to Machine) network, or another network. FIG. 1 is merely a simplified schematic diagram of an example. The network may further include another network device that is not shown in FIG. 1.

It should be understood that the communications system 100 shown in FIG. 1 may be only a communications network that can implement the embodiments of this application. The embodiments of this application may be further applied to another communications network in which cache content is obtained based on application redirection, for example, a 5G/6G network, a long term evolution (Long Term Evolution, LTE) network, a fixed network, a MulteFire network, a home eNodeB network, non-3GPP such as a Wi-Fi access mobile network, a global system for mobile communications (Global System for Mobile Communications, GSM) network, and a wideband code division multiple access (Wideband Code Division Multiple Access, WCDMA) network. The embodiments of this application are not limited thereto.

A content distribution method and a device provided in the embodiments of this application may be applied to a terminal device, and the terminal device includes a hardware layer, an operating system layer running above the hardware layer, and an application layer running above the operating system layer. The hardware layer includes hardware such as a central processing unit (Central Processing Unit, CPU), a memory management unit (MMU, Memory Management Unit), and a memory (also referred to as a main memory). The operating system may be any one or more of types of computer operating systems that implement service processing by using a process (Process), for example, a Linux operating system, a Unix operating system, an Android operating system, an iOS operating system, or a Windows operating system. The application layer includes applications such as a browser, an address book, word processing software, and instant messaging software.

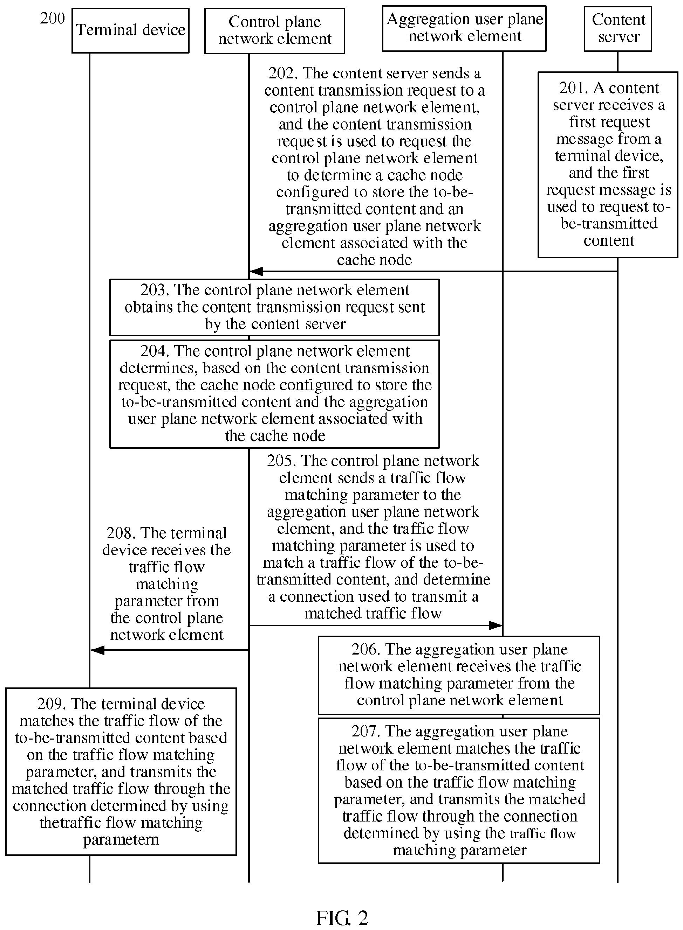

FIG. 2 is a schematic flowchart of a redirection method 200 according to an embodiment of this application. As shown in FIG. 2, the method 200 includes the following content.

201. A content server receives a first request message from a terminal device, where the first request message is used to request to-be-transmitted content.

Optionally, the content server obtains identification information of the to-be-transmitted content based on the first request message.

202. The content server sends a content transmission request to a control plane network element, where the content transmission request is used to request the control plane network element to determine a cache node configured to store the to-be-transmitted content and an aggregation user plane network element associated with the cache node.

Before sending the content transmission request to the control plane network element, the content server allocates redirected address information, and the redirected address information is used to determine a connection used to transmit a matched traffic flow. Optionally, the redirected address information includes a redirected IP address and/or a redirected port number. The content server sends the content transmission request to the control plane network element, and the content transmission request includes the redirected address information.

Optionally, the content transmission request includes a traffic flow template, and in this case, the traffic flow template includes an IP address of the terminal device and/or a port number of the terminal device. Optionally, the traffic flow template may further include the redirected address information.

The content transmission request further includes the identification information of the to-be-transmitted content.

203. The control plane network element obtains the content transmission request sent by the content server.

The control plane network element obtains the redirected address information by using the content transmission request.

Optionally, the content transmission request may further include the traffic flow template, and in this case, the traffic flow template includes the IP address of the terminal device and/or the port number of the terminal device. Optionally, the redirected address information may be a piece of independent information, or may be loaded into the traffic flow template.

The content transmission request includes the identification information of the to-be-transmitted content.

204. The control plane network element determines, based on the content transmission request, the cache node configured to store the to-be-transmitted content and the aggregation user plane network element associated with the cache node.

Optionally, the control plane network element obtains, based on the identification information of the to-be-transmitted content, identification information of the cache node that stores the to-be-transmitted content. Optionally, the control plane network element determines, based on at least one of the identification information of the cache node that stores the to-be-transmitted content, quality-of-service information that can be applied by the terminal device that requests the to-be-transmitted content, a network congestion status, location information of the terminal device, and location information of the aggregation user plane network element, the cache node configured to store the to-be-transmitted content. Optionally, the control plane network element sends the identification information of the to-be-transmitted content to a cache indexing device, and the control plane network element receives, from the cache indexing device, the identification information of the cache node that stores the to-be-transmitted content.

Optionally, the control plane network element determines, based on at least one of the identification information of the to-be-transmitted content, the location information of the terminal device, the location information of the aggregation user plane network element, the quality-of-service information that can be applied by the terminal device, and the network congestion status, the aggregation user plane network element associated with the cache node.

Optionally, the control plane network element may determine, based on identification information of the terminal device included in the content transmission request, the quality-of-service information that can be applied by the terminal device and the location information of the terminal device.

It should be understood that the control plane network element may directly obtain the network congestion status.

205. The control plane network element sends a traffic flow matching parameter to the aggregation user plane network element, where the traffic flow matching parameter is used to match a traffic flow of the to-be-transmitted content and determine a connection used to transmit a matched traffic flow.

The traffic flow of the to-be-transmitted content includes the redirected address information.

It should be understood that in the traffic flow matching parameter, the redirected address information may be used to determine the connection used to transmit the matched traffic flow.

Optionally, the traffic flow matching parameter includes the traffic flow template, and the traffic flow template includes the redirected address information. Optionally, the traffic flow template further includes the IP address of the terminal device that requests the to-be-transmitted content and/or the port number of the terminal device.

206. The aggregation user plane network element receives the traffic flow matching parameter from the control plane network element.

Optionally, the aggregation user plane network element receives, from the control plane network element, an identifier of the cache node configured to store the to-be-transmitted content and an identifier of an access network device that has an RRC connection to the terminal device that requests the content to be transmitted.

The aggregation user plane network element establishes, based on the identifier of the cache node and the identifier of the access network device, the connection determined by using the redirected address information.

207. The aggregation user plane network element matches the traffic flow of the to-be-transmitted content based on the traffic flow matching parameter, and transmits the matched traffic flow through the connection determined by using the traffic flow matching parameter.

The aggregation user plane network element binds a first transport layer connection and a second transport layer connection. The first transport layer connection is a transport layer connection between the terminal device and the aggregation user plane network element, and the second transport layer connection is a transport layer connection between the aggregation user plane network element and the cache node.

Optionally, the transport layer connection may be a transmission control protocol (Transfer Control Protocol, TCP) connection, or may be a user datagram protocol (User Datagram Protocol, UDP) connection, or may be an application layer connection carried on a transport layer, for example, a hypertext transfer protocol (Hypertext Transfer Protocol, Http) connection used by a WWW service program, or a file transfer protocol (File Transfer Protocol, Ftp) connection.

208. The terminal device receives the traffic flow matching parameter from the control plane network element.

209. The terminal device matches the traffic flow of the to-be-transmitted content based on the traffic flow matching parameter, and transmits the matched traffic flow through the connection determined by using the traffic flow matching parameter.

Optionally, the terminal device receives the first request message from the content server, and the first request message includes the redirected address information; and the terminal device sets a destination address and a destination port number of an application layer redirection connection based on the redirected address information.

Therefore, in the redirection method in this embodiment of this application, the control plane network element determines, based on the content transmission request sent by the content server, the cache node configured to store the to-be-transmitted content and the aggregation user plane network element associated with the cache node, and simultaneously, the aggregation user plane network element matches the traffic flow of the to-be-transmitted content based on the traffic flow matching parameter, and transmits the to-be-transmitted content through the connection determined based on the traffic flow matching parameter, so that the aggregation user plane network element can accurately transmit the to-be-transmitted content from the cache node to the terminal device.

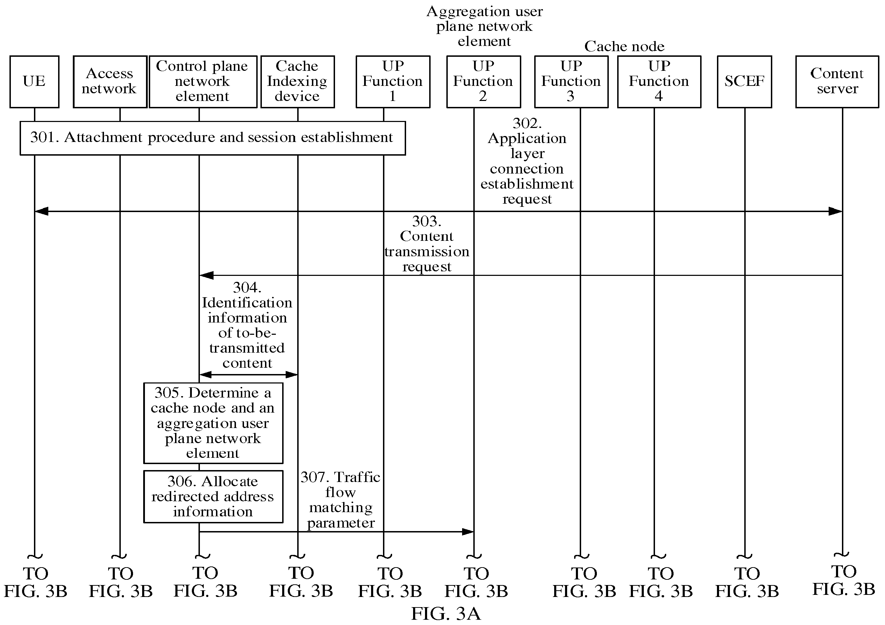

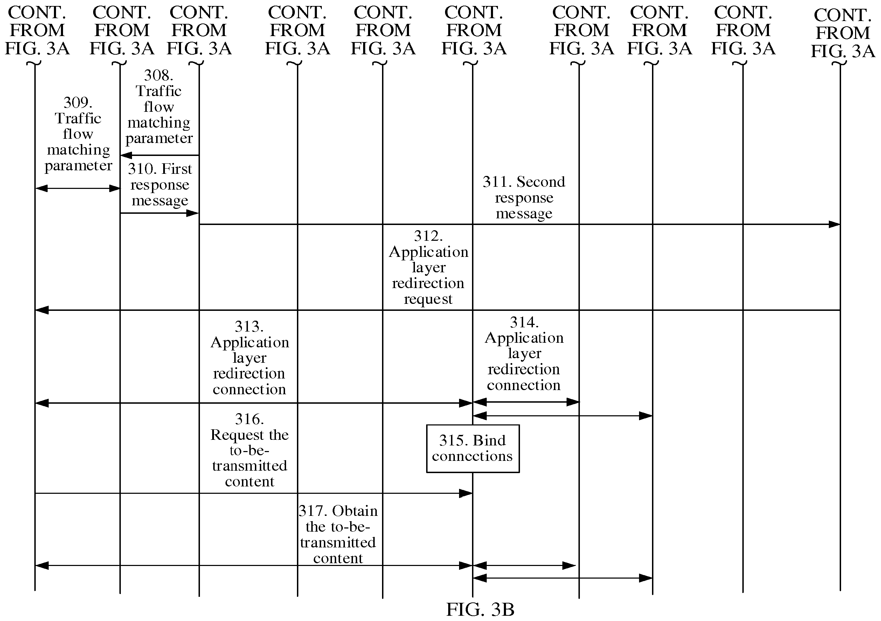

Optionally, in an embodiment, as shown in FIG. 3A and FIG. 3B, the method 300 includes the following content. The examples of Fig. 3A and Fig. 3B and related embodiments are not according to the invention and are present for illustration purposes only.

301. A terminal device completes an attachment procedure and a mobile network session establishment process.

It should be understood that the terminal device has established a radio resource control (Radio Resource Control, RRC) connection to an access network device, and the terminal device has also established a communication connection to either of a control plane network element and a user plane network element by using the access network device.

302. The terminal device sends an application layer connection establishment request to a content server, where the establishment request includes information about content requested by the terminal device.

It should be understood that the establishment request is used to request obtaining of the content from the content server.

It should also be understood that the content server may identify, based on the establishment request, the content requested by the terminal device.

Optionally, the terminal device may request the obtaining of content by sending, to the content server, a data packet that includes the information about the requested content.

Optionally, the content server may obtain identification information of to-be-transmitted content based on the establishment request sent by the terminal device, and the identification information of the to-be-transmitted content is used to identify the content requested by the terminal device.

303. The content server sends a content transmission request to a control plane network element by using a capability exposure network element, where the content transmission request is used to request the control plane network element to determine a cache node configured to store to-be-transmitted content and an aggregation user plane network element associated with the cache node.

Optionally, the content transmission request may carry the identification information of the to-be-transmitted content and identification information of the terminal device.

Optionally, the content transmission request may carry an Internet protocol (Internet Protocol, IP) address of the terminal device and a port number (Port Number) of the terminal device.

Optionally, the content transmission request may further carry a traffic flow template (Traffic Flow Template, TFT), and the TFT includes the IP address of the terminal device and the port number of the terminal device.

It should be understood that the content server first sends the content transmission request to the capability exposure network element, and then the capability exposure network element sends the content transmission request to the control plane network element.

304. The control plane network element sends identification information of the to-be-transmitted content to a cache indexing device, and receives, from the cache indexing device, identification information of the cache node that stores the to-be-transmitted content.

Optionally, the cache indexing device queries, based on the identification information of the to-be-transmitted content, the cache node that stores the to-be-transmitted content, and obtains the identification information of the cache node that stores the to-be-transmitted content.

It should be understood that when querying the cache node, the control plane network element queries specific cache node that includes the to-be-transmitted content, namely, the content requested by the terminal device.

Optionally, all of a plurality of cache nodes may store the to-be-transmitted content. In this case, the plurality of cache nodes may be marked by identification information of cache nodes that store the to-be-transmitted content.

For example, a user plane network element 3 and a user plane network element 4 in FIG. 3A and FIG. 3B are two cache nodes that store the to-be-transmitted content. In this case, the identification information that is received from the cache indexing device and that is of the cache nodes that store the to-be-transmitted content includes at least identification information of the user plane network element 3 and identification information of the user plane network element 4.

Optionally, there may be a plurality of cache nodes, and each of the plurality of cache nodes stores a part of the to-be-transmitted content.

For example, for the user plane network element 3 and the user plane network element 4 in FIG. 3A and FIG. 3B, the user plane network element 3 may store one part of the to-be-transmitted content, and the user plane network element 4 may store the other part of the to-be-transmitted content. In this case, the identification information that is received from the cache indexing device and that is of cache nodes that store the to-be-transmitted content includes at least the identification information of the user plane network element 3 and the identification information of the user plane network element 4.

305. The control plane network element determines, based on the content transmission request, the cache node configured to store the to-be-transmitted content and the aggregation user plane network element associated with the cache node.

Optionally, the control plane network element may determine, based on at least one of the identification information of the cache node that stores the to-be-transmitted content, quality-of-service information that can be applied by the terminal device that requests the to-be-transmitted content, a network congestion status, location information of the terminal device, and location information of the aggregation user plane network element, the cache node configured to store the to-be-transmitted content.

Optionally, the control plane network element may determine, based on at least one of the location information of the terminal device that requests the to-be-transmitted content, the location information of the aggregation user plane network element, the quality-of-service information that can be applied by the terminal device, and the network congestion status, the aggregation user plane network element associated with the cache node.

Optionally, the control plane network element may directly determine the quality-of-service information that can be applied by the terminal device and the location information of the terminal device.

It should be understood that the control plane network element may directly obtain the network congestion status.

Optionally, the aggregation user plane network element may obtain the content from one or more cache nodes, and send the content to the terminal device after aggregating the content.

For example, in FIG. 3A and FIG. 3B, the aggregation user plane network element is a user plane network element 2. The user plane network element 2 may obtain the to-be-transmitted content from the user plane network element 3 and the user plane network element 4, and send the to-be-transmitted content to the terminal device after obtaining the to-be-transmitted content.

306. The control plane network element allocates redirected address information, where the redirected address information is used to determine a connection used to transmit a matched traffic flow.

Optionally, the redirected address information includes a redirected IP address and a redirected port number, namely, redirected IP address/ redirected Port number.

Optionally, the redirected address information may be used to determine the following connection: a transport layer connection between the terminal device that requests the to-be-transmitted content and the aggregation user plane network element, and/or a transport layer connection between the aggregation user plane network element and the cache node. Optionally, the transport layer connection may be a TCP connection, or may be a UDP connection, or may be an application layer connection carried on a transport layer, for example, an HTTP connection or an FTP connection.

Optionally, the content transmission request may trigger the control plane network element to allocate the redirected address information.

Optionally, step 306 only needs to be performed between step 303 and step 307, and step 306 is not necessarily performed only after step 305 is completed.

307. The control plane network element sends a traffic flow matching parameter to the aggregation user plane network element, where the traffic flow matching parameter is used to match a traffic flow of the to-be-transmitted content and determine the connection used to transmit a matched traffic flow.

Optionally, the traffic flow matching parameter includes the redirected address information.

Optionally, the traffic flow matching parameter may further include the TFT, and in this case, in addition to the IP address of the terminal device and the port number of the terminal device, the TFT further includes the redirected address information.

Optionally, based on the traffic flow matching parameter, the aggregation user plane network element matches a traffic flow received from the cache node, and matches a traffic flow received from the terminal device or the access network device.

For example, as shown in FIG. 3A and FIG. 3B, the aggregation user plane network element (namely, the user plane network element 2) sends, to the cache nodes (namely, the user plane network element 3 and the user plane network element 4) based on the traffic flow matching parameter, a traffic flow received from the terminal device; and the aggregation user plane network element (namely, the user plane network element 2) sends, to the terminal device based on the traffic flow matching parameter, a traffic flow received from the cache nodes (namely, the user plane network element 3 and the user plane network element 4).

Optionally, in step 307, the control plane network element may further send an identifier of the access network device to the aggregation user plane network element, and in this case, the aggregation user plane network element establishes a communication connection to the access network device based on the identifier of the access network device.

It should be understood that the access network device is a radio access network device on which the terminal device that requests the to-be-transmitted content camps.

308. The control plane network element sends the traffic flow matching parameter to an access network device, where the traffic flow matching parameter is used to match the traffic flow of the to-be-transmitted content and determine the connection used to transmit the matched traffic flow.

Optionally, the traffic flow matching parameter includes the redirected address information.

Optionally, the traffic flow matching parameter includes the TFT, and in this case, in addition to the IP address of the terminal device and the port number of the terminal device, the TFT further includes the redirected address information.

Optionally, in step 308, the control plane network element may further send an identifier of the aggregation user plane network element to the access network device. In this case, the access network device establishes a communication connection to the aggregation user plane network element based on the identifier of the aggregation user plane network element.

It should be understood that the aggregation user plane network element is a user plane network element associated with the cache node that stores the to-be-transmitted content.

It should also be understood that in step 309, the access network device forwards the traffic flow matching parameter to the terminal device, and the access network device does not use the traffic flow matching parameter.

309. The terminal device receives the traffic flow matching parameter from the access network device, and the terminal device performs an RRC reconfiguration process based on the traffic flow matching parameter, to modify an air interface connection to the access network device.

Optionally, the terminal device matches a traffic flow based on the traffic flow matching parameter.

It should be understood that after the terminal device matches the traffic flow, the terminal device may accurately send a request message to the cache node that stores the to-be-transmitted content, and the terminal device may accurately receive a data message from the cache node.

310. The access network device sends a first response message to the control plane network element.

It should be understood that when the access network device sends the first response message, it indicates that an RRC connection between the access network device and the terminal device has been reconfigured.

311. The control plane network element sends a second response message to the content server by using the capability exposure network element, where the second response message includes the redirected address information.

It should be understood that the second response message is a response message specific to the content transmission request.

Optionally, the second response message may further include the identification information of the terminal device and the identification information of the to-be-transmitted content.

It should be understood that the second response message may trigger the content server to send an application layer redirection request to the terminal device.

312. The content server initiates an application layer redirection request to the terminal device, where the application layer redirection request includes the redirected address information.

Optionally, after receiving the application layer redirection request, the terminal device modifies a redirected destination address and/or a redirected destination port number based on the redirected address information.

For example, the terminal device respectively sets the redirected destination address and the destination port number as the redirected IP address and the redirected port number.

313. The terminal device initiates an application layer redirection connection.

Optionally, the terminal device establishes the transport layer connection to the aggregation user plane network element.

For example, the terminal device establishes the transport layer connection to the aggregation user plane network element (namely, the user plane network element 2).

It should be understood that the aggregation user plane network element is the user plane network element associated with the cache node that stores the to-be-transmitted content.

It should also be understood that either of the terminal device and the aggregation user plane network element matches the traffic flow based on a same traffic flow matching parameter, so that the traffic flow sent by the terminal device to the cache node and the traffic flow sent by the cache node to the terminal device can be successfully transmitted.

314. The aggregation user plane network element establishes the application layer redirection connection.

Optionally, the aggregation user plane network element establishes the transport layer connection to the cache node.

For example, as shown in FIG. 3A and FIG. 3B, the aggregation user plane network element (namely, the user plane network element 2) establishes a transport layer connection to either of the cache nodes (namely, the user plane network element 3 and the user plane network element 4).

Optionally, when step 313 is performed, step 314 is triggered. Specifically, when the terminal device initiates the application layer redirection connection, the aggregation user plane network element starts to establish the transport layer connection to the cache node. Optionally, step 313 may be completed before step 314, or step 313 and step 314 may be simultaneously completed, or step 313 may be completed after step 314.

315. The aggregation user plane network element binds a transport layer connection that is established in step 313 and that is between the terminal device and the aggregation user plane network element and a transport layer connection that is established in step 314 and that is between the aggregation user plane network element and the cache node.

316. The terminal device sends the traffic flow to the aggregation user plane network element to request the content.

317. The aggregation user plane network element requests the to-be-transmitted content from the cache node (namely, a user plane network element 3 and a user plane network element 4) through the bound transport layer connection (namely, the connection established in step 314); and the cache node sends the to-be-transmitted content to the terminal device.

Optionally, the aggregation user plane network element establishes the transport layer connection to either of the two cache nodes. In this case, the aggregation user plane network element can obtain content from the two cache nodes in parallel at a same time. Therefore, efficiency is improved. For example, for a video, a first half of the video may be obtained from the user plane network element 3, and a latter half of the video may be obtained from the user plane network element 4. In this way, content can be obtained from the two cache nodes in parallel at the same time. Therefore, the terminal device can obtain the requested content more quickly.

Therefore, in the redirection method in this embodiment of this application, the control plane network element determines, based on the content transmission request sent by the content server, the cache node configured to store the to-be-transmitted content and the aggregation user plane network element associated with the cache node. In addition, the aggregation user plane network element matches the traffic flow of the to-be-transmitted content based on the traffic flow matching parameter, and transmits the to-be-transmitted content through the connection determined by using the traffic flow matching parameter, so that the aggregation user plane network element can accurately transmit the to-be-transmitted content from the cache node to the terminal device.

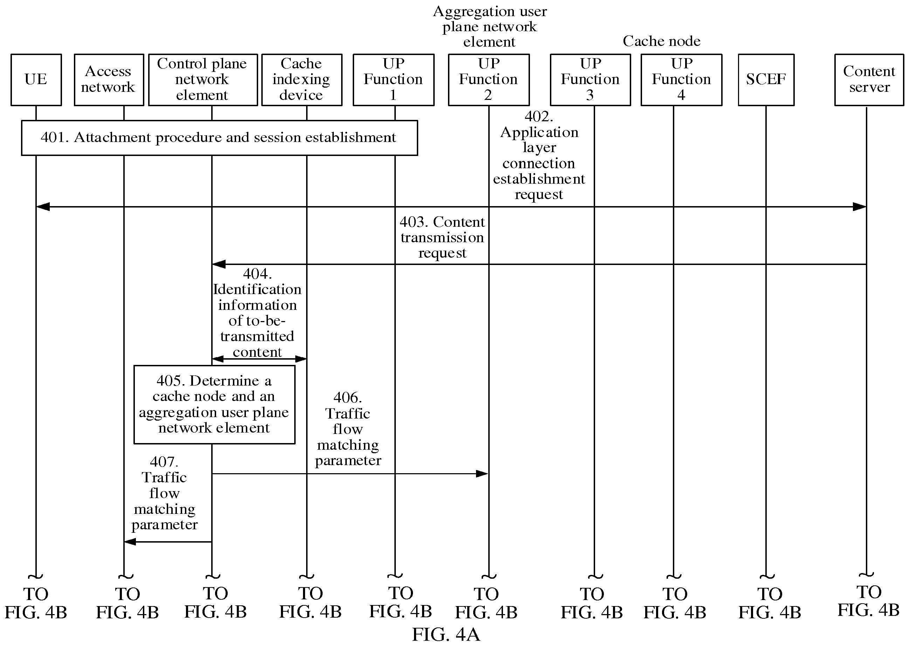

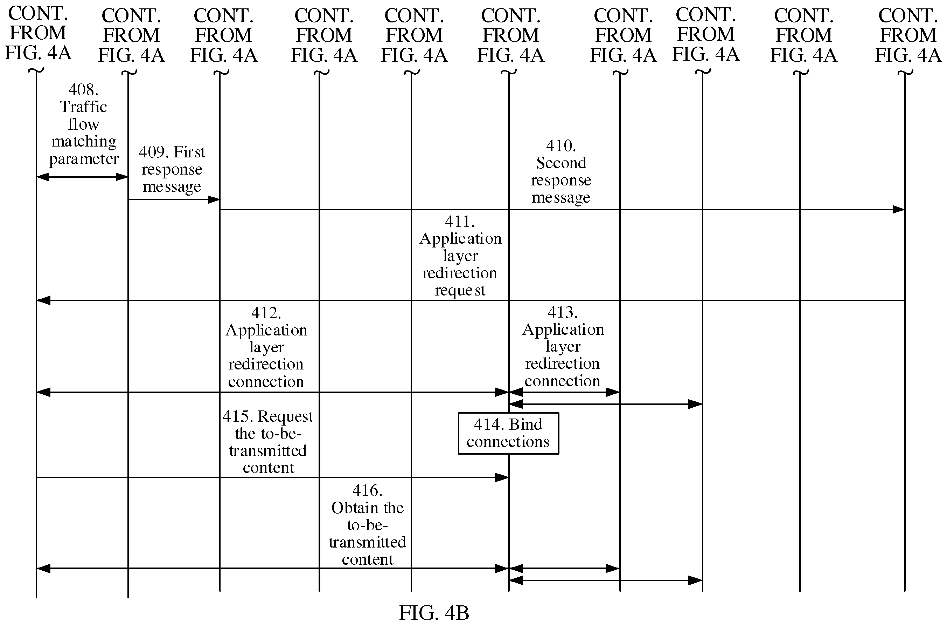

FIG. 4A and FIG. 4B show a method 400. In the method 400 in this embodiment, redirected address information is allocated by a content server. For example, the method 400 includes the following content.

401. A terminal device completes an attachment procedure and a mobile network session establishment process.

It should be understood that the terminal device has established an RRC connection to an access network device. In addition, the terminal device has established a communication connection to either of the control plane network element and a user plane network element by using the access network device.

402. The terminal device sends an application layer connection establishment request to a content server, where the establishment request includes information about content requested by the terminal device, namely, information about to-be-transmitted content.

It should be understood that the establishment request is used to request obtaining of the content from the content server.

It should also be understood that the content server may identify, based on the establishment request, the content requested by the terminal device.

Optionally, the content server may obtain identification information of the to-be-transmitted content based on the establishment request sent by the terminal device, and the identification information of the to-be-transmitted content is used to identify the content requested by the terminal device.

Optionally, after obtaining the identification information of the to-be-transmitted content, the content server allocates the redirected address information, and the redirected address information is used to determine a connection used to transmit a matched traffic flow.

Optionally, the redirected address information includes a redirected IP address and a redirected port number, namely, redirected IP address /a redirected Port number.

Optionally, the redirected address information may determine the following connection: a transport layer connection between the terminal device and an aggregation user plane network element, and/or a transport layer connection between the aggregation user plane network element and a cache node. Optionally, the transport layer connection may be a TCP connection, or may be a UDP connection, or may be an application layer connection carried on a transport layer, for example, an HTTP connection, or an FTP connection.

It should be understood that the aggregation user plane network element is a user plane network element associated with a cache node that stores the to-be-transmitted content.

403. The content server sends a content transmission request to a control plane network element by using a capability exposure network element, where the content transmission request is used to request the control plane network element to determine a cache node configured to store the to-be-transmitted content and an aggregation user plane network element associated with the cache node.

The content transmission request carries the redirected address information.

Optionally, the content transmission request may further carry the identification information of the to-be-transmitted content and identification information of the terminal device.

Optionally, the content transmission request may carry an IP address of the terminal device and a port number of the terminal device.

Optionally, the content transmission request may further carry a traffic flow template (Traffic Flow Template, TFT), and the TFT includes the IP address of the terminal device, the port number of the terminal device, and the redirected address information.

It should be understood that the content server first sends the content transmission request to the capability exposure network element, and then the capability exposure network element sends the content transmission request to the control plane network element.

404. The control plane network element sends identification information of the to-be-transmitted content to a cache indexing device, and receives, from the cache indexing device, identification information of the cache node that stores the to-be-transmitted content.

Optionally, the cache indexing device queries, based on the identification information of the to-be-transmitted content, the cache node that stores the to-be-transmitted content, and obtains the identification information of the cache node that stores the to-be-transmitted content.

It should be understood that when querying the cache node, the control plane network element queries specific cache node that includes the to-be-transmitted content, namely, the content requested by the terminal device.

Optionally, all of a plurality of cache nodes may store the to-be-transmitted content. In this case, the plurality of cache nodes may be marked by identification information of cache nodes that store the to-be-transmitted content.

For example, a user plane network element 3 and a user plane network element 4 in FIG. 4A and FIG. 4B are two cache nodes that store the to-be-transmitted content. In this case, the identification information that is received from the cache indexing device and that is of the cache nodes that store the to-be-transmitted content includes at least identification information of the user plane network element 3 and identification information of the user plane network element 4.

Optionally, there may be a plurality of cache nodes, and each of the plurality of cache nodes stores a part of the to-be-transmitted content.

For example, for the user plane network element 3 and the user plane network element 4 in FIG. 4A and FIG. 4B, the user plane network element 3 may store one part of the to-be-transmitted content, and the user plane network element 4 may store the other part of the to-be-transmitted content. In this case, the identification information that is received from the cache indexing device and that is of the cache nodes that store the to-be-transmitted content includes at least the identification information of the user plane network element 3 and the identification information of the user plane network element 4.

405. The control plane network element determines, based on the content transmission request, the cache node configured to store the to-be-transmitted content and the aggregation user plane network element associated with the cache node.

Optionally, the control plane network element may determine, based on at least one of the identification information of the cache node that stores the to-be-transmitted content, quality-of-service information that can be applied by the terminal device that requests the to-be-transmitted content, a network congestion status, location information of the terminal device, and location information of the aggregation user plane network element, the cache node configured to store the to-be-transmitted content.

Optionally, the control plane network element may determine, based on at least one of the location information of the terminal device that requests the to-be-transmitted content, the location information of the aggregation user plane network element, the quality-of-service information that can be applied by the terminal device, and the network congestion status, the aggregation user plane network element associated with the cache node.

Optionally, the control plane network element may directly determine the quality-of-service information that can be applied by the terminal device and the location information of the terminal device.

It should be understood that the control plane network element may directly obtain the network congestion status.

Optionally, the aggregation user plane network element may obtain the content from one or more cache nodes, and send the content to the terminal device after aggregating the content.

For example, in FIG. 4A and FIG. 4B, the aggregation user plane network element is a user plane network element 2. The user plane network element 2 may obtain the to-be-transmitted content from the user plane network element 3 and the user plane network element 4, and send the to-be-transmitted content to the terminal device after obtaining the to-be-transmitted content.

406. The control plane network element sends a traffic flow matching parameter to the aggregation user plane network element, where the traffic flow matching parameter is used to match a traffic flow of the to-be-transmitted content and determine the connection used to transmit a matched traffic flow.

The traffic flow matching parameter includes the redirected address information.

Optionally, the traffic flow matching parameter may further include the TFT, and in this case, in addition to the IP address of the terminal device and the port number of the terminal device, the TFT further includes the redirected address information.

Based on the traffic flow matching parameter, the aggregation user plane network element matches a traffic flow received from the cache node, and matches a traffic flow received from the terminal device or the access network device.

For example, as shown in FIG. 4A and FIG. 4B, the aggregation user plane network element (namely, the user plane network element 2) sends, to the cache nodes (namely, the user plane network element 3 and the user plane network element 4) based on the traffic flow matching parameter, a traffic flow received from the terminal device; and the aggregation user plane network element (namely, the user plane network element 2) sends, to the terminal device based on the traffic flow matching parameter, a traffic flow received from the cache nodes (namely, the user plane network element 3 and the user plane network element 4).

Optionally, in step 406, the control plane network element may further send an address of the access network device to the aggregation user plane network element, and in this case, the aggregation user plane network element establishes a communication connection to the access network device based on the address of the access network device.

It should be understood that the access network device is a radio access network device on which the terminal device that requests the to-be-transmitted content camps.

407. The control plane network element sends the traffic flow matching parameter to an access network device, where the traffic flow matching parameter is used to match the traffic flow of the to-be-transmitted content and determine the connection used to transmit the matched traffic flow.

The traffic flow matching parameter includes the redirected address information.

Optionally, the traffic flow matching parameter includes the TFT, and in this case, in addition to the IP address of the terminal device and the port number of the terminal device, the TFT further includes the redirected address information.

Optionally, in step 407, the control plane network element may further send an identifier of the aggregation user plane network element to the access network device. In this case, the access network device establishes a communication connection to the aggregation user plane network element based on the identifier of the aggregation user plane network element.

It should be understood that the aggregation user plane network element is the user plane network element associated with the cache node that stores the to-be-transmitted content.

It should also be understood that in step 408, the access network device forwards the traffic flow matching parameter to the terminal device, and the access network device does not use the traffic flow matching parameter.

408. The terminal device receives the traffic flow matching parameter from the access network device, and the terminal device performs an RRC reconfiguration process based on the traffic flow matching parameter, to modify an air interface connection to the access network device.

Optionally, the terminal device matches a traffic flow based on the traffic flow matching parameter.

It should be understood that after the terminal device matches the traffic flow, the terminal device may accurately send a request message to the cache node that stores the to-be-transmitted content, and the terminal device may accurately receive a data message from the cache node.

409. The access network device sends a first response message to the control plane network element.

It should be understood that sending, by the access network device, the first response message indicates that an RRC connection between the access network device and the terminal device has been reconfigured.

410. The control plane network element sends a second response message to the content server by using the capability exposure network element.

It should be understood that the second response message is a response message specific to the content transmission request.

Optionally, the second response message may further include the identification information of the terminal device and the identification information of the to-be-transmitted content.

It should be understood that the second response message may trigger the content server to send an application layer redirection request to the terminal device.

411. The content server initiates an application layer redirection request to the terminal device, where the application layer redirection request includes redirected address information.

Optionally, after receiving the application layer redirection request, the terminal device modifies a redirected destination address and a redirected destination port number based on the redirected address information.

For example, the terminal device sets the redirected destination address and the destination port number to the redirected IP address and the redirected port number respectively.

412. The terminal device initiates an application layer redirection connection.

Optionally, the terminal device establishes the transport layer connection to the aggregation user plane network element.

For example, the terminal device establishes the transport layer connection to the aggregation user plane network element (namely, the user plane network element 2).

It should be understood that the aggregation user plane network element is the user plane network element associated with the cache node that stores the to-be-transmitted content.

It should also be understood that either of the terminal device and the aggregation user plane network element matches the traffic flow based on the same traffic flow matching parameter, so that the traffic flow sent by the terminal device to the cache node and the traffic flow sent by the cache node to the terminal device can be successfully transmitted.

413. The aggregation user plane network element establishes a transport layer connection to the cache node.

For example, as shown in FIG. 4A and FIG. 4B, the aggregation user plane network element (namely, the user plane network element 2) establishes a transport layer connection to either of the cache nodes (namely, the user plane network element 3 and the user plane network element 4).

Optionally, when step 412 is performed, step 413 is triggered. Specifically, when the terminal device initiates the application layer redirection connection, the aggregation user plane network element starts to establish the transport layer connection to the cache node. Optionally, step 412 may be completed before step 413, or step 412 and step 413 may be simultaneously completed, or step 412 may be completed after step 413.

414. The aggregation user plane network element binds a transport layer connection that is established in step 412 and that is between the terminal device and the aggregation user plane network element and a transport layer connection that is established in step 413 and that is between the aggregation user plane network element and the cache node.

415. The terminal device sends the traffic flow to the aggregation user plane network element to request the content.

416. The aggregation user plane network element requests the to-be-transmitted content from the cache node (namely, a user plane network element 3 and a user plane network element 4) through the bound transport layer connection (namely, the connection established in step 413); and the cache node sends the to-be-transmitted content to the terminal device.

Optionally, the aggregation user plane network element establishes the transport layer connection to either of the two cache nodes. In this case, the aggregation user plane network element can obtain content from the two cache nodes in parallel at a same time. Therefore, efficiency is improved. For example, for a video, a first half of the video may be obtained from the user plane network element 3, and a latter half of the video may be obtained from the user plane network element 4. In this way, content can be obtained from the two cache nodes in parallel at the same time. Therefore, the terminal device can obtain the requested content more quickly.

Therefore, in the redirection method in this embodiment of this application, the control plane network element determines, based on the content transmission request sent by the content server, the cache node configured to store the to-be-transmitted content and the aggregation user plane network element associated with the cache node. In addition, the aggregation user plane network element matches the traffic flow of the to-be-transmitted content based on the traffic flow matching parameter, and transmits the to-be-transmitted content through the connection determined by using the traffic flow matching parameter, so that the aggregation user plane network element can accurately transmit the to-be-transmitted content from the cache node to the terminal device.

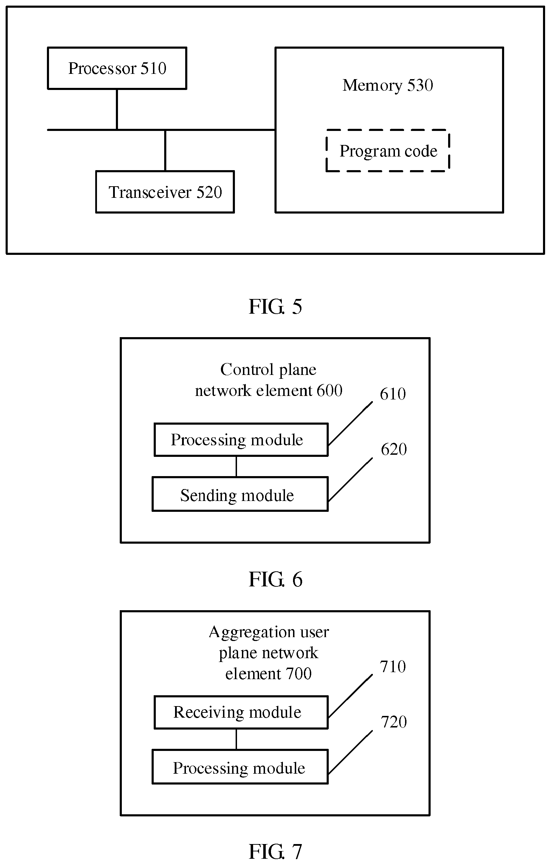

FIG. 5 is a schematic block diagram of a computer device 500 according to an embodiment of this application. Specifically, as shown in FIG. 5, the computer device 500 includes at least one processor 510 (for example, a general purpose processor (CPU) having computing and processing capabilities, a digital signal processor (Digital Signal Processor, DSP), an application-specific integrated circuit (Application Specific Integrated Circuit, ASIC), or a field programmable gate array (Field Programmable Gate Array, FPGA)), and the processor 510 is configured to manage and schedule modules and components of the computer device 500. The computer device 500 further includes at least one transceiver 520 (receiver/transmitter), and a memory 530. The components of the computer device 500 communicate with each other by using an internal connection path, to transmit a control signal and/or a data signal.

The method disclosed in the embodiments of this application may be applied to the processor 510, or is used to execute an executable module stored in the memory 530, for example, a computer program. The memory 530 may include a high speed random access memory (Random Access Memory, RAM), or may further include a non-volatile memory (non-volatile memory). The memory may include a read-only memory and a random access memory, and provide required signaling or data, a required program, and the like for the processor. A part of the memory may further include a non-volatile random access memory (NVRAM). A communication connection to at least one other network element is implemented by using at least one transceiver 520 (which may be wired or wireless).

In specific implementation, in an embodiment, the computer device 500 may include a plurality of processors, and each processor may be a single-core (single-CPU) processor, or may be a multi-core (multi-CPU) processor. The processor herein may be one or more devices, circuits, and/or processing cores configured to process data (for example, a computer program instruction).

In specific implementation, in an embodiment, the computer device 500 may further include the transceiver 520. The transceiver 520 communicates with the processor 510, and information may be displayed in a plurality of manners. For example, the transceiver 520 may be a liquid crystal display (liquid crystal display, LCD), a light emitting diode (light emitting diode, LED) display device, a cathode-ray tube (cathode ray tube, CRT) display device, or a projector (projector). The transceiver 520 communicates with the processor 510, and can receive user input in a plurality of manners. For example, an input device may be a mouse, a keyboard, a touchscreen device, or a sensing device. The transceiver 520 may also be a communications interface.

The computer device 500 may be a general purpose computer device or a dedicated computer device. In specific implementation, the computer device 500 may be a desktop computer, a portable computer, a network server, a personal digital assistant(Personal Digital Assistant, PDA), a mobile phone, a tablet computer, a wireless terminal device, a communications device, an embedded device, or a device with a structure similar to that in FIG. 5. A type of the computer device 500 is not limited in this embodiment of this application.

This embodiment of this application further provides a computer storage medium, and the computer storage medium may store a program instruction for performing any of the foregoing methods.

Optionally, the storage medium may be specifically the memory 530.

For example, a memory of the control plane network element in FIG. 2, FIG. 3A and FIG. 3B, or FIG. 4A and FIG. 4B stores one or more software modules. The control plane network element may implement the software module by using a processor and program code in the memory, to implement wireless communication.

For example, a memory of the aggregation user plane network element in FIG. 2, FIG. 3A and FIG. 3B, or FIG. 4A and FIG. 4B stores one or more software modules. The aggregation user plane network element may implement the software module by using a processor and program code in the memory, to control a data transmission rate.

For example, a memory of the content server in FIG. 2, FIG. 3A and FIG. 3B, or FIG. 4A and FIG. 4B stores one or more software modules. The content server may implement the software module by using a processor and program code in the memory, to control a data transmission rate.

FIG. 6 is a schematic block diagram of a control plane network element 600 according to an embodiment of this application. As shown in FIG. 6, the control plane network element 600 includes:
a processing module 610, configured to obtain a content transmission request sent by a content server, where
the processing module 610 is further configured to determine, based on the content transmission request, a cache node configured to store to-be-transmitted content and an aggregation user plane network element associated with the cache node; and
a sending module 620, configured to send a traffic flow matching parameter to the aggregation user plane network element, where the traffic flow matching parameter is used to match a traffic flow of the to-be-transmitted content and determine a connection used to transmit a matched traffic flow.

The content transmission request includes redirected address information, and the redirected address information is used to determine the connection used to transmit the matched traffic flow.

The sending module 620 is further configured to send the traffic flow matching parameter to the aggregation user plane network element, where the traffic flow matching parameter includes the redirected address information.

Optionally, after the processing module 610 obtains the content transmission request sent by the content server,
the processing module 610 is further configured to allocate redirected address information, where the redirected address information is used to determine the connection used to transmit the matched traffic flow; and
the sending module 620 is further configured to send the traffic flow matching parameter to the aggregation user plane network element, where the traffic flow matching parameter includes the redirected address information.

Optionally, the content transmission request includes identification information of the to-be-transmitted content;
the processing module 610 is further configured to obtain, based on the identification information of the to-be-transmitted content, identification information of the cache node that stores the to-be-transmitted content; and
the processing module 610 is further configured to determine, based on at least one of the identification information of the cache node that stores the to-be-transmitted content, quality-of-service information that can be applied by a terminal device that requests the to-be-transmitted content, a network congestion status, location information of the terminal device, and location information of the aggregation user plane network element, the cache node configured to store the to-be-transmitted content.

Optionally, the sending module 620 is further configured to send the identification information of the to-be-transmitted content to a cache indexing device; and
a receiving module 630 is configured to receive, from the cache indexing device, the identification information of the cache node that stores the to-be-transmitted content.

Optionally, the processing module 610 is further configured to determine, based on at least one of the identification information of the to-be-transmitted content, the location information of the terminal device, the location information of the aggregation user plane network element, the quality-of-service information that can be applied by the terminal device, and the network congestion status, the aggregation user plane network element associated with the cache node.

Optionally, the sending module 620 is further configured to send the traffic flow matching parameter to a terminal device that requests the to-be-transmitted content, where the traffic flow matching parameter includes the redirected address information.

Optionally, the sending module 620 is further configured to send a response message to the content server for the content transmission request, where the response message includes the redirected address information.

Optionally, the redirected address information includes a redirected IP address and/or a redirected port number.

Optionally, the connection includes:
a transport layer connection between the terminal device that requests the to-be-transmitted content and the aggregation user plane network element and/or a transport layer connection between the aggregation user plane network element and the cache node.

Optionally, the traffic flow matching parameter includes a traffic flow template, and the traffic flow template includes the redirected address information.

Optionally, the traffic flow template further includes an IP address of the terminal device that requests the to-be-transmitted content and/or a port number of the terminal device.

Optionally, the content transmission request includes the traffic flow template.

The control plane network element 600 in this embodiment of this application may be corresponding to the control plane network element in the foregoing method embodiments shown in FIG. 2, FIG. 3A and FIG. 3B, and FIG. 4A and FIG. 4B. In addition, each module or unit of the control plane network element 600 is configured to perform a corresponding process performed by the control plane network element in the foregoing method embodiments. For brevity, details are not described herein again.

It should be understood that in this embodiment, the control plane network element 600 is presented in a form of a function module. The "module" herein may be an application-specific integrated circuit (application-specific integrated circuit, ASIC), a circuit, a processor that executes one or more software programs or firmware programs, a memory, an integrated logic circuit, and/or another component that can provide the foregoing function. In another embodiment, a person skilled in the art may figure out that the control plane network element 600 may be implemented in a form shown in FIG. 5. The processing module 610 may be implemented by using the processor 510 and the memory 530 shown in FIG. 5. The sending module 620 and the receiving module 630 may be implemented by using the transceiver 520 shown in FIG. 5. Specifically, the processor executes a computer program stored in the memory to implement a function of the processor.

FIG. 7 is a schematic block diagram of an aggregation user plane network element 700 according to an embodiment of this application. As shown in FIG. 7, the aggregation user plane network element 700 includes:
a receiving module 710, configured to receive a traffic flow matching parameter from a control plane network element, where the traffic flow matching parameter includes redirected address information, and the traffic flow matching parameter is used to match a traffic flow of to-be-transmitted content and determine a connection used to transmit a matched traffic flow; and
a processing module 720, configured to: match the traffic flow of the to-be-transmitted content based on the traffic flow matching parameter, and transmit the matched traffic flow through the connection determined by using the traffic flow matching parameter.

Optionally, the redirected address information may be used to determine the connection used to transmit the matched traffic flow.

Optionally, the receiving module 710 is further configured to receive, from the control plane network element, an identifier of a cache node configured to store the to-be-transmitted content and an identifier of an access network device that has an RRC connection to a terminal device that requests the content to be transmitted; and
the processing module 720 is further configured to establish, based on the identifier of the cache node and the identifier of the access network device, the connection determined by using the redirected address information.

Optionally, the connection includes:
a transport layer connection between the terminal device that requests the to-be-transmitted content and the aggregation user plane network element and/or a transport layer connection between the aggregation user plane network element and the cache node.

The processing module 720 is further configured to bind a first transport layer connection and a second transport layer connection, where the first transport layer connection is the transport layer connection between the terminal device and the aggregation user plane network element, and the second transport layer connection is the transport layer connection between the aggregation user plane network element and the cache node.

Optionally, the redirected address information includes a redirected IP address and/or a redirected port number.

The aggregation user plane network element 700 in this embodiment of this application may be corresponding to the aggregation user plane network element in the foregoing method embodiments shown in FIG. 2, FIG. 3A and FIG. 3B, and FIG. 4A and FIG. 4B. In addition, each module or unit of the aggregation user plane network element 700 is configured to perform a corresponding process performed by the aggregation user plane network element in the foregoing method embodiments. For brevity, details are not described herein again.

It should be understood that in this embodiment, the aggregation user plane network element 700 is presented in a form of a function module. The "module" herein may be an application-specific integrated circuit (application-specific integrated circuit, ASIC), a circuit, a processor that executes one or more software programs or firmware programs, a memory, an integrated logic circuit, and/or another component that can provide the foregoing function. In another embodiment, a person skilled in the art may figure out that the aggregation user plane network element 700 may be implemented in a form shown in FIG. 5. The processing module 720 may be implemented by using the processor 510 and the memory 530 shown in FIG. 5. The receiving module 710 may be implemented by using the transceiver 520 shown in FIG. 5. Specifically, the processor executes a computer program stored in the memory to implement a function of the processor.

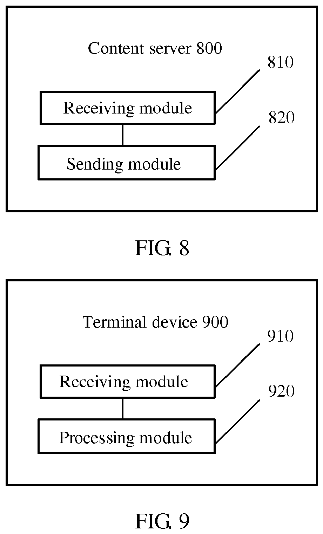

FIG. 8 is a schematic block diagram of a content server 800 according to an embodiment of this application. As shown in FIG. 8, the content server 800 includes:
a receiving module 810, configured to receive a first request message from a terminal device, where the first request message is used to request to-be-transmitted content; and
a sending module 820, configured to send a content transmission request to a control plane network element, where the content transmission request is used to request the control plane network element to determine a cache node configured to store the to-be-transmitted content and an aggregation user plane network element associated with the cache node.

Optionally, before the sending module 820 sends the content transmission request to the control plane network element, the content server 800 further includes:
a processing module 830, configured to allocate redirected address information, where the redirected address information is used to determine a connection used to transmit a matched traffic flow.

The sending module 820 is further configured to send the content transmission request to the control plane network element, where the content transmission request includes the redirected address information.

Optionally, the receiving module 810 is further configured to receive, from the control plane network element, a response message specific to the content transmission request, where the response message includes the redirected address information.

Optionally, the sending module 820 is further configured to send a second request message to the terminal device that requests the to-be-transmitted content, where the second request message includes the redirected address information, and the second request message is used to request the terminal device that requests the content to be transmitted to set, based on the redirected address information, a destination address and/or a destination port number of an application layer redirection connection.

Optionally, the content transmission request includes identification information of the to-be-transmitted content.

Optionally, the redirected address information includes a redirected IP address and/or a redirected port number.

The content server 800 in this embodiment of this application may be corresponding to the content server in the foregoing method embodiments shown in FIG. 2, FIG. 3A and FIG. 3B, and FIG. 4A and FIG. 4B. In addition, each module or unit of the content server 800 is configured to perform a corresponding process performed by the content server in the foregoing method embodiments. For brevity, details are not described herein again.

It should be understood that in this embodiment, the content server 800 is presented in a form of a function module. The "module" herein may be an application-specific integrated circuit (application-specific integrated circuit, ASIC), a circuit, a processor that executes one or more software programs or firmware programs, a memory, an integrated logic circuit, and/or another component that can provide the foregoing function. In another embodiment, a person skilled in the art may figure out that the content server 800 may be implemented in a form shown in FIG. 5. The processing module 830 may be implemented by using the processor 510 and the memory 530 shown in FIG. 5. The receiving module 810 and the sending module 820 may be implemented by using the transceiver 520 shown in FIG. 5. Specifically, the processor executes a computer program stored in the memory to implement a function of the processor.

FIG. 9 is a schematic block diagram of a terminal device 900 according to an embodiment of this application. As shown in FIG. 9, the terminal device 900 includes:
a receiving module 910, configured to receive a traffic flow matching parameter from a control plane network element, where the traffic flow matching parameter includes the redirected address information, and the traffic flow matching parameter is used to match a traffic flow of to-be-transmitted content and determine a connection used to transmit a matched traffic flow; and
a processing module 920, configured to: match the traffic flow of the to-be-transmitted content based on the traffic flow matching parameter, and transmit the matched traffic flow through the connection determined by using the traffic flow matching parameter.

Optionally, the redirected address information may be used to determine the connection used to transmit the matched traffic flow.

Optionally, the receiving module 910 is further configured to receive a first request message from the content server, where the first request message includes the redirected address information.

The processing module 920 is further configured to set a destination address and/or a destination port number of an application layer redirection connection based on the redirected address information.

Optionally, the redirected address information includes a redirected IP address and/or a redirected port number.

The terminal device 900 in this embodiment of this application may be corresponding to the terminal device in the foregoing method embodiments shown in FIG. 2, FIG. 3A and FIG. 3B, and FIG. 4A and FIG. 4B. In addition, each module or unit of the terminal device 900 is configured to perform a corresponding process performed by the terminal device in the foregoing method embodiments. For brevity, details are not described herein again.

It should be understood that in this embodiment, the terminal device 900 is presented in a form of a function module. The "module" herein may be an application-specific integrated circuit (application-specific integrated circuit, ASIC), a circuit, a processor that executes one or more software programs or firmware programs, a memory, an integrated logic circuit, and/or another component that can provide the foregoing function. In another embodiment, a person skilled in the art may figure out that the terminal device 900 may be implemented in a form shown in FIG. 5. The processing module 920 may be implemented by using the processor 510 and the memory 530 shown in FIG. 5. The receiving module 910 may be implemented by using the transceiver 520 shown in FIG. 5. Specifically, the processor executes a computer program stored in the memory to implement a function of the processor.

A person of ordinary skill in the art may be aware that, with reference to the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When computer program instructions are loaded and executed on the computer, all or some of the procedure or functions according to the embodiments of the present invention are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a Solid State Disk (SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A redirection method, comprising:
Obtaining (203, 403), by a control plane network element (130), a content transmission request sent from a content server (150), wherein the content transmission request comprises identification information of the to-be-transmitted content and a redirected address information;
Determining (204, 405), by the control plane network element (130) based on the content transmission request, a cache node (190, 191, 192) configured to store to-be-transmitted content and an aggregation user plane network element (180) associated with the cache node (190, 191, 192) and configured to aggregate the to-be-transmitted content from the cache node (190, 191, 192); and
Sending (205, 406), by the control plane network element (130), a traffic flow matching parameter to the aggregation user plane network element (180), wherein the traffic flow matching parameter comprises the redirected address information and wherein the traffic flow matching parameter is used to match a traffic flow of the to-be-transmitted content and wherein the redirected address information is used to determine a connection used to transmit a matched traffic flow, wherein the connection comprises a transport layer connection between the terminal device (110) that requests the to-be-transmitted content and the aggregation user plane network element and/or a transport layer connection between the aggregation user plane network element (180) and the cache node (190, 191, 192); and
Sending (407), by the control plane network element (130), the traffic flow matching parameter to a terminal device (110) that requests the to-be-transmitted content.

2. The method according to claim 1, wherein the redirected address information comprises a redirected IP address and/or a redirected port number.

3. The method according to any one of claims 1 to 2, wherein the determining (204), by the control plane network element (130) based on the content transmission request, a cache node (190, 191, 192) configured to store to-be-transmitted content comprises:
obtaining, by the control plane network element (130) based on the identification information of the to-be-transmitted content, identification information of the cache node (190, 191, 192) that stores the to-be-transmitted content; and
determining, by the control plane network element (130) based on at least one of the identification information of the cache node (190, 191, 192) that stores the to-be-transmitted content, quality-of-service information that can be applied by a terminal device (110) that requests the to-be-transmitted content, a network congestion status, location information of the terminal device (110), and location information of the aggregation user plane network element (180), the cache node (190, 191, 192) configured to store the to-be-transmitted content.

4. The method according to claim 3, wherein the obtaining, by the control plane network element (130) based on the identification information of the to-be-transmitted content, identification information of the cache node (190, 191, 192) that stores the to-be-transmitted content comprises:
sending, by the control plane network element (130), the identification information of the to-be-transmitted content to a cache indexing device (170); and
receiving, by the control plane network element (130) from the cache indexing device (170), the identification information of the cache node (190, 191, 192) that stores the to-be-transmitted content.

5. A control plane network element (130), comprising:
a processing module (610), configured to obtain (203, 403) a content transmission request sent from a content server (150), wherein the content transmission request comprises identification information of the to-be-transmitted content and a redirected address information, wherein
the processing module (610) is further configured to determine (204, 405), based on the content transmission request, a cache node (190, 191, 192) configured to store to-be-transmitted content and an aggregation user plane network element (180) associated with the cache node (190, 191, 192) and configured to aggregate the to-be-transmitted content from the cache node (190, 191, 192); and
a sending module (620), configured to send (205, 406) a traffic flow matching parameter to the aggregation user plane network element (180), wherein the traffic flow matching parameter comprises the redirected address information and wherein the traffic flow matching parameter is used to match a traffic flow of the to-be-transmitted content and wherein the redirected address information is used to determine a connection used to transmit a matched traffic flow, wherein the connection comprises a transport layer connection between the terminal device (110) that requests the to-be-transmitted content and the aggregation user plane network element (180) and/or a transport layer connection between the aggregation user plane network element (180) and the cache node (190, 191, 192); and
the sending module (620), further configured to send (407) the traffic flow matching parameter to a terminal device (110) that requests the to-be-transmitted content.

6. The control plane network element (130) according to claim 5, the redirected address information comprises a redirected IP address and/or a redirected port number.

7. The control plane network element (130) according to any one of claims 5 to 6, wherein the processing module (610) is further configured to obtain, based on the identification information of the to-be-transmitted content, identification information of the cache node (190, 191, 192) that stores the to-be-transmitted content; and
the processing module (610) is further configured to determine, based on at least one of the identification information of the cache node (190, 191, 192) that stores the to-be-transmitted content, quality-of-service information that can be applied by a terminal device (110) that requests the to-be-transmitted content, a network congestion status, location information of the terminal device (110), and location information of the aggregation user plane network element (180), the cache node (190, 191, 192) configured to store the to-be-transmitted content.

8. The control plane network element (130) according to claim 7, wherein
the sending module (620) is further configured to send the identification information of the to-be-transmitted content to a cache indexing device (170); and
a receiving module is configured to receive, from the cache indexing device (170), the identification information of the cache node (190, 191, 192) that stores the to-be-transmitted content.

## Patentansprüche

1. Umleitungsverfahren, das Folgendes umfasst:
Erhalten (203, 403), durch ein Steuerungsebenennetzelement (130), einer Inhaltsübertragungsanforderung, die von einem Inhaltsserver (150) gesendet wird, wobei die Inhaltsübertragungsanforderung Identifikationsinformationen des zu übertragenden Inhalts und umgeleitete Adressinformationen umfasst;
Bestimmen (204, 405), durch das Steuerungsebenennetzelement (130) basierend auf der Inhaltsübertragungsanforderung, eines Cache-Knotens (190, 191, 192), der konfiguriert ist, um zu übertragenden Inhalt und ein Aggregationsbenutzerebenennetzelement (180) zu speichern, das dem Cache-Knoten (190, 191, 192) zugeordnet und konfiguriert ist, um den zu übertragenden Inhalt von dem Cache-Knoten (190, 191, 192) zu aggregieren; und
Senden (205, 406), durch das Steuerungsebenennetzelement (130), eines Verkehrsflussanpassungsparameters an das Aggregationsbenutzerebenennetzelement (180), wobei der Verkehrsflussanpassungsparameter die umgeleiteten Adressinformationen umfasst und wobei der Verkehrsflussanpassungsparameter verwendet wird, um einen Verkehrsfluss des zu übertragenden Inhalts anzupassen, und wobei die umgeleiteten Adressinformationen verwendet werden, um eine Verbindung zu bestimmen, die verwendet wird, um einen angepassten Verkehrsfluss zu übertragen, wobei die Verbindung eine Transportschichtverbindung zwischen dem Endgerät (110), das den zu übertragenden Inhalt anfordert, und dem Aggregationsbenutzerebenennetzelement und/oder eine Transportschichtverbindung zwischen dem Aggregationsbenutzerebenennetzelement (180) und dem Cache-Knoten (190, 191, 192) umfasst; und
Senden (407), durch das Steuerungsebenennetzelement (130), des Verkehrsflussanpassungsparameters an ein Endgerät (110), das den zu übertragenden Inhalt anfordert.

2. Verfahren nach Anspruch 1, wobei die umgeleiteten Adressinformationen eine umgeleitete IP-Adresse und/oder eine umgeleitete Anschlussnummer umfassen.

3. Verfahren nach einem der Ansprüche 1 bis 2, wobei das Bestimmen (204), durch das Steuerungsebenennetzelement (130) basierend auf der Inhaltsübertragungsanforderung, eines Cache-Knotens (190, 191, 192), der konfiguriert ist, um zu übertragenden Inhalt zu speichern, Folgendes umfasst:
Erhalten, durch das Steuerungsebenennetzelement (130) basierend auf den Identifikationsinformationen des zu übertragenden Inhalts, der Identifikationsinformationen des Cache-Knotens (190, 191, 192), der den zu übertragenden Inhalt speichert; und
Bestimmen, durch das Steuerungsebenennetzelement (130) basierend auf den Identifikationsinformationen des Cache-Knotens (190, 191, 192), der den zu übertragenden Inhalt speichert, Dienstqualitätsinformationen, die durch ein Endgerät (110) angewandt werden können, das den zu übertragenden Inhalt anfordert, einem Netzüberlastungsstatus, Standortinformationen des Endgeräts (110) und/oder Standortinformationen des Aggregationsbenutzerebenennetzelements (180), wobei der Cache-Knoten (190, 191, 192) konfiguriert ist, um den zu übertragenden Inhalt zu speichern.

4. Verfahren nach Anspruch 3, wobei das Erhalten, durch das Steuerungsebenennetzelement (130) basierend auf den Identifikationsinformationen des zu übertragenden Inhalts, der Identifikationsinformationen des Cache-Knotens (190, 191, 192), der den zu übertragenden Inhalt speichert, Folgendes umfasst:
Senden, durch das Steuerungsebenennetzelement (130), der Identifikationsinformationen des zu übertragenden Inhalts an eine Cache-Indexierungsvorrichtung (170); und
Empfangen, durch das Steuerungsebenennetzelement (130) von der Cache-Indexierungsvorrichtung (170), der Identifikationsinformationen des Cache-Knotens (190, 191, 192), der den zu übertragenden Inhalt speichert.

5. Steuerungsebenennetzelement (130), das Folgendes umfasst:
ein Verarbeitungsmodul (610), das konfiguriert ist, um eine Inhaltsübertragungsanforderung zu erhalten (203, 403), die von einem Inhaltsserver (150) gesendet wird, wobei die Inhaltsübertragungsanforderung die Identifikationsinformationen des zu übertragenden Inhalts und umgeleitete Adressinformationen umfasst, wobei
das Verarbeitungsmodul (610) ferner konfiguriert ist, um basierend auf der Inhaltsübertragungsanforderung einen Cache-Knoten (190, 191, 192) zu bestimmen (204, 405), der konfiguriert ist, um zu übertragenden Inhalt und ein Aggregationsbenutzerebenennetzelement (180) zu speichern, das dem Cache-Knoten (190, 191, 192) zugeordnet und konfiguriert ist, um den zu übertragenden Inhalt von dem Cache-Knoten (190, 191, 192) zu aggregieren; und
ein Sendemodul (620), das konfiguriert ist, um einen Verkehrsflussanpassungsparameter an das Aggregationsbenutzerebenennetzelement (180) zu senden (205, 406), wobei der Verkehrsflussanpassungsparameter die umgeleiteten Adressinformationen umfasst und wobei der Verkehrsflussanpassungsparameter verwendet wird, um einen Verkehrsfluss des zu übertragenden Inhalts anzupassen, und wobei die umgeleiteten Adressinformationen verwendet werden, um eine Verbindung zu bestimmen, die verwendet wird, um einen angepassten Verkehrsfluss zu übertragen, wobei die Verbindung eine Transportschichtverbindung zwischen dem Endgerät (110), das den zu übertragenden Inhalt anfordert, und dem Aggregationsbenutzerebenennetzelement (180) und/oder eine Transportschichtverbindung zwischen dem Aggregationsbenutzerebenennetzelement (180) und dem Cache-Knoten (190, 191, 192) umfasst; und
das Sendemodul (620), das ferner konfiguriert ist, um den Verkehrsflussanpassungsparameter an ein Endgerät (110) zu senden (407), das den zu übertragenden Inhalt anfordert.

6. Steuerungsebennetzelement (130) nach Anspruch 5, wobei die umgeleiteten Adressinformationen eine umgeleitete IP-Adresse und/oder eine umgeleitete Anschlussnummer umfassen.

7. Steuerungsebenennetzelement (130) nach einem der Ansprüche 5 bis 6, wobei das Verarbeitungsmodul (610) ferner konfiguriert ist, um basierend auf den Identifikationsinformationen des zu übertragenden Inhalts die Identifikationsinformationen des Cache-Knotens (190, 191, 192) zu erhalten, der den zu übertragenden Inhalt speichert; und
das Verarbeitungsmodul (610) ferner konfiguriert ist, um basierend auf den Identifikationsinformationen des Cache-Knotens (190, 191, 192), der den zu übertragenden Inhalt speichert, den Dienstqualitätsinformationen, die durch ein Endgerät (110) angewandt werden können, das den zu übertragenden Inhalt anfordert, einem Netzüberlastungsstatus, den Standortinformationen des Endgeräts (110) und/oder den Standortinformationen des Aggregationsbenutzernetzelements (180) den Cache-Knoten (190, 191, 192) zu bestimmen, der konfiguriert ist, um den zu übertragenden Inhalt zu speichern.

8. Steuerungsebenennetzelement (130) nach Anspruch 7, wobei
das Sendemodul (620) ferner konfiguriert ist, um die Identifikationsinformationen des zu übertragenden Inhalts an eine Cache-Indexierungsvorrichtung (170) zu senden; und
ein Empfangsmodul konfiguriert ist, um von der Cache-Indexierungsvorrichtung (170) die Identifikationsinformationen des Cache-Knotens (190, 191, 192) zu empfangen, der den zu übertragenden Inhalt speichert.

## Revendications

1. Procédé de redirection, comprenant :
L'obtention (203, 403), par un élément de réseau de plan de commande (130), d'une demande de transmission de contenu envoyée à partir d'un serveur de contenu (150), la demande de transmission de contenu comprenant des informations d'identification du contenu à transmettre et des informations d'adresse redirigée ;
La détermination (204, 405), par l'élément de réseau de plan de commande (130) sur la base de la demande de transmission de contenu, d'un nœud de cache (190, 191, 192) configuré pour stocker le contenu à transmettre et un élément de réseau de plan d'utilisateur d'agrégation (180) associé au nœud de cache (190, 191, 192) et configuré pour agréger le contenu à transmettre à partir du nœud de cache (190, 191, 192) ; et
L'envoi (205, 406), par l'élément de réseau de plan de commande (130), d'un paramètre de mise en correspondance de flux de trafic à l'élément de réseau de plan d'utilisateur d'agrégation (180), le paramètre de mise en correspondance de flux de trafic comprenant les informations d'adresse redirigée et le paramètre de mise en correspondance de flux de trafic étant utilisé pour mettre en correspondance un flux de trafic du contenu à transmettre et les informations d'adresse redirigée étant utilisées pour déterminer une connexion utilisée pour transmettre un flux de trafic mis en correspondance, la connexion comprenant une connexion de couche de transport entre le dispositif terminal (110) qui demande le contenu à transmettre et l'élément de réseau de plan d'utilisateur d'agrégation et/ou une connexion de couche de transport entre l'élément de réseau de plan d'utilisateur d'agrégation (180) et le nœud de cache (190, 191, 192) ; et
L'envoi (407), par l'élément de réseau de plan de commande (130), du paramètre de mise en correspondance de flux de trafic à un dispositif terminal (110) qui demande le contenu à transmettre.

2. Procédé selon la revendication 1, les informations d'adresse redirigée comprenant une adresse IP redirigée et/ou un numéro de port redirigé.

3. Procédé selon l'une quelconque des revendications 1 à 2, la détermination (204), par l'élément de réseau de plan de commande (130) sur la base de la demande de transmission de contenu, d'un nœud de cache (190, 191, 192) configuré pour stocker un contenu à transmettre comprenant :
l'obtention, par l'élément de réseau de plan de commande (130) sur la base des informations d'identification du contenu à transmettre, des informations d'identification du nœud de cache (190, 191, 192) qui stocke le contenu à transmettre ; et
la détermination, par l'élément de réseau de plan de commande (130) sur la base d'informations d'identification du nœud de cache (190, 191, 192) qui stocke le contenu à transmettre et/ou d'informations de qualité de service qui peuvent être appliquées par un dispositif terminal (110) qui demande le contenu à transmettre et/ou d'un état d'encombrement du réseau et/ou d'informations d'emplacement du dispositif terminal (110) et/ou d'informations d'emplacement de l'élément de réseau de plan d'utilisateur d'agrégation (180), du nœud de cache (190, 191, 192) configuré pour stocker le contenu à transmettre.

4. Procédé selon la revendication 3, l'obtention, par l'élément de réseau de plan de commande (130) sur la base d'informations d'identification du contenu à transmettre, des informations d'identification du nœud de cache (190, 191, 192) qui stocke le contenu à transmettre comprenant :
l'envoi, par l'élément de réseau de plan de commande (130), d'informations d'identification du contenu à transmettre à un dispositif d'indexation de cache (170) ; et
la réception, par l'élément de réseau de plan de commande (130) à partir du dispositif d'indexation de cache (170), des informations d'identification du nœud de cache (190, 191, 192) qui stocke le contenu à transmettre.

5. Élément de réseau de plan de commande (130), comprenant :
un module de traitement (610), configuré pour obtenir (203, 403) une demande de transmission de contenu envoyée à partir d'un serveur de contenu (150), la demande de transmission de contenu comprenant des informations d'identification du contenu à transmettre et des informations d'adresse redirigée,
le module de traitement (610) étant en outre configuré pour déterminer (204, 405), sur la base de la demande de transmission de contenu, un nœud de cache (190, 191, 192) configuré pour stocker le contenu à transmettre et un élément de réseau de plan d'utilisateur d'agrégation (180) associé au nœud de cache (190, 191, 192) et configuré pour agréger le contenu à transmettre à partir du nœud de cache (190, 191, 192) ; et
un module d'envoi (620), configuré pour envoyer (205, 406) un paramètre de mise en correspondance de flux de trafic à l'élément de réseau de plan d'utilisateur d'agrégation (180), le paramètre de mise en correspondance de flux de trafic comprenant les informations d'adresse redirigée et le paramètre de mise en correspondance de flux de trafic étant utilisé pour mettre en correspondance un flux de trafic du contenu à transmettre et les informations d'adresse redirigée étant utilisées pour déterminer une connexion utilisée pour transmettre un flux de trafic mis en correspondance, la connexion comprenant une connexion de couche de transport entre le dispositif terminal (110) qui demande le contenu à transmettre et l'élément de réseau de plan d'utilisateur d'agrégation (180) et/ou une connexion de couche de transport entre l'élément de réseau de plan d'utilisateur d'agrégation (180) et le nœud de cache (190, 191, 192) ; et
le module d'envoi (620), configuré en outre pour envoyer (407) le paramètre de mise en correspondance de flux de trafic à un dispositif terminal (110) qui demande le contenu à transmettre.

6. Élément de réseau de plan de commande (130) selon la revendication 5, les informations d'adresse redirigée comprenant une adresse IP redirigée et/ou un numéro de port redirigé.

7. Élément de réseau de plan de commande (130) selon l'une quelconque des revendications 5 à 6, le module de traitement (610) étant en outre configuré pour obtenir, sur la base d'informations d'identification du contenu à transmettre, des informations d'identification du nœud de cache (190, 191, 192) qui stocke le contenu à transmettre ; et
le module de traitement (610) étant en outre configuré pour déterminer, sur la base d'informations d'identification du nœud de cache (190, 191, 192) qui stocke le contenu à transmettre et/ou d'informations de qualité de service qui peuvent être appliquées par un dispositif terminal (110) qui demande le contenu à transmettre et/ou d'un état d'encombrement du réseau et/ou d'informations d'emplacement du dispositif terminal (110) et/ou d'informations d'emplacement de l'élément de réseau de plan d'utilisateur d'agrégation (180), le nœud de cache (190, 191, 192) configuré pour stocker le contenu à transmettre.

8. Elément de réseau de plan de commande (130) selon la revendication 7,
le module d'envoi (620) étant en outre configuré pour envoyer les informations d'identification du contenu à transmettre à un dispositif d'indexation de cache (170) ; et
un module de réception étant configuré pour recevoir, à partir du dispositif d'indexation de cache (170), les informations d'identification du nœud de cache (190, 191, 192) qui stocke le contenu à transmettre.
